Europäisches Patentamt

**European Patent Office**

**Office européen des brevets**

(19)

(11) Numéro de publication: **0 169 275**
**A1**

(12)

# DEMANDE DE BREVET EUROPEEN

(21) Numéro de dépôt: **84201092.8**

(22) Date de dépôt: **25.07.84**

(51) Int. Cl.⁴: **D 04 H 1/00**
**G 01 G 11/12**

(43) Date de publication de la demande:
**29.01.86 Bulletin 86/5**

(84) Etats contractants désignés:
**AT BE CH DE FR GB LI LU NL SE**

(71) Demandeur: **Tasca, Giorgio, Dr. Ing.**
**Lungopo Machiavelli 29**
**I-10124 Torino(IT)**

(72) Inventeur: **Tasca, Giorgio, Dr. Ing.**
**Lungopo Machiavelli 29**
**I-10124 Torino(IT)**

(74) Mandataire: **Patrito, Pier Franco, Dr. Ing.**
**Cabinet PATRITO BREVETTI Via Don Minzoni 14**
**I-10121 Torino(IT)**

(54) Appareillage pour le contrôle d'une installation de traitement de matériau en ruban.

(57) Un appareillage de contrôle pour des installations de traitement de matériaux en ruban et spécialement pour la fabrication de tissus-non-tissus, qui comprend un banc de mesurage (1) sur lequel on fait passer continuellement le matériau traité (0), soutenu entre des suports (6,7) disposés à une distance préfixée et appuyé en un endroit intermédiaire (17) sur un moyen (19) pour mesurer le poids du tronçon de matériau compris entre les supports (6,7). La mesure ainsi relevée, après élaboration, peut être lue sur un indicateur (22), et elle est enregistrée continuellement sur une bande (24) constituant un document relatif au matériau traité dans chaque période d'activité de l'installation. Un dispositif de signalisation (25) avertit en cas de dépassement des limites de poids unitaire préfixées pour le matériau (0), et éventuellement il arrête l'installation. De plus, l'appareillage peut pourvoir automatiquement à un réglage des machines opératrices de l'installation dans un sens tel à corriger les variations relevées dans le poids unitaire du matériau traité (0), particulièrement en réglant son étirage.

EP 0 169 275 A1

./...

## APPAREILLAGE POUR LE CONTROLE D'UNE INSTALLATION
## DE TRAITEMENT DE MATERIAU EN RUBAN

La présente invention a pour objet un appareillage pour le contrôle d'une installation de traitement de matériau en ruban, telle qu'en particulier une installation de fabrication de tissu-non-tissu.

Dans le traitement et spécialement dans la fabrication de matériaux en ruban, tels qu'en particulier les tissus-non-tissus, des différents paramètres influencent le poids unitaire, référé à la surface ou à la longueur du matériau traité. Ce poids peut prendre une importance considérable, soit pour satisfaire des exigences particulières, soit pour des raisons économiques. Par exemple, dans la fabrication de tissus-non-tissus destinés à être vendus au métrage, bien souvent l'acheteur impose un poids unitaire minimal qui doit être respecté, tandis que d'autre côté chaque dépassement de celui-ci représente pour le fabricant des plus grands frais qu'il ne peut pas récupérer. Il est donc important que l'installation de traitement soit régulée de sorte à débiter du matériau dont le poids unitaire respecte, avec la tolérance la plus réduite possible, une valeur préfixée. Du moment que certains des paramètres qui influencent le poids unitaire peuvent se modifier dans le temps d'une façon imprévoyable, il faut procéder à une vérification du poids unitaire effectivement présenté par le matériau obtenu. A présent, cela est fait d'une façon discontinue, en pesant des stocks de ruban de longueur notoire, mais en opérant de cette façon on peut procéder à des interventions correctives seulement avec un retard considérable, et de plus, ce qui est contrôlé est seulement un poids unitaire moyen, et on n'obtient aucune information sur les variations possibles du poids unitaire d'un tronçon à l'autre du matériau. La conséquence de cette façon d'opérer est la nécessité de prévoir des tolérances relativement grandes pour le poids unitaire, avec la possibilité de produire des déchets et avec la certitude de ne pas se conduire de la façon économiquement plus avantageuse.

Le but de la présente invention est de réaliser un appareillage pour contrôler d'une façon continue le poids unitaire d'un matériau en ruban en cours de traitement, de sorte à pouvoir obtenir des informations sur le poids unitaire réel de chaque tronçon du matériau, et à pouvoir effectuer en temps utile des interventions correctives destinées, en général, à maintenir le matériau dans les limites de poids unitaire désirées, ainsi qu'à obtenir une plus grande uniformité du matériau.

Ce but est atteint, suivant l'invention, par un appareillage de contrôle comprenant: - un banc de mesurage inséré en un endroit adapté de l'installation de traitement, ce banc supportant des moyens de soutien du matériau en ruban en cours de traitement, disposés à une distance mutuelle préfixée, et un moyen d'appui pour le matériau en ruban disposé en un endroit intermédiaire entre lesdits moyens de soutien; - un moyen de mesurage connecté audit moyen d'appui pour mesurer la force appliquée par gravité par le matériau en ruban audit moyen d'appui; - un moyen élaborateur du signal de sortie dudit moyen de mesurage, destiné à calculer le poids unitaire du tronçon de matériau en ruban situé entre lesdits moyens de soutien; - un moyen d'indication visuelle du poids unitaire ainsi calculé par le moyen élaborateur; - et un moyen avertisseur connecté audit moyen élaborateur pour être actionné par le dépassement, dans un sens ou dans l'autre, des limites préfixées pour ledit poids unitaire.

Grâce à un appareillage ainsi composé, le poids unitaire du matériau en ruban traité est contrôlé continuellement avec référence à sa valeur moyenne sur une longueur limitée; on obtient donc une information exhaustive aussi sur les variations locales du poids unitaire, et on peut entreprendre des interventions correctives sur l'installation, non seulement en vue d'obtenir un produit montrant, en masse, les caractéristiques désirées, mais aussi pour contenir les variations locales de ces caractéristiques.

De préférence, les moyens de soutien pour le matériau en ruban sur le banc de mesurage sont doubles, de sorte que les moyens de soutien in-

térieurs définissent la longueur soumise à mesurage, tandis que les moyens extérieurs supportent les forces dues à la flexibilité imparfaite du matériau, et empêchent que celles-ci influencent la précision du mesurage.

De préférence l'appareillage comprend en outre des moyens pour maintenir constante la tension longitudinale du matériau en ruban en correspondence du banc de mesurage. Cela assure que le matériau forme, entre les moyens de soutien et le moyen d'appui interposé, des chaînettes de configuration constante qui permettent, par l'élaboration du signal, d'établir avec précision la valeur réelle du poids unitaire du matériau en ruban. Lesdits moyens pour maintenir constante la tension peuvent avantageusement consister en un rouleau dansant disposé à l'entrée du banc de mesurage, en un moyen de traînage avec moteur à vitesse variable, disposé à la sortie du banc de mesurage, et en un circuit (bien connu en soi) pour le contrôle de la vitesse du moteur de traînage en fonction de la position du rouleau dansant.

Il est avantageux que l'appareillage comprenne aussi un instrument enregistreur sur bande, connecté audit élaborateur pour délivrer un enregistrement graphique continu du poids unitaire local du matériau en ruban traité, dans chaque période de fonctionnement de l'installation. Un tel enregistrement permet, en plus des interventions correctives effectuées chaque fois, d'avoir une vision générale du fonctionnement de l'installation; de plus, la bande enregistrée ainsi obtenue peut être annexée à chaque unité de matériau en ruban traité, comme un document indiquant les caractéristiques générales et locales du matériau en ruban contenu dans l'unité considérée.

L'appareillage peut comprende encore des moyens pour relever la vitesse de passage du matériau en ruban sur le banc de mesurage, et pour calculer, indiquer et, le cas échéant, enregistrer la production horaire et/ou la production dans une période de fonctionnement préfixée, exprimée en poids, en longueur et/ou en surface du matériau traité.

L'appareillage peut encore comprendre avantageusement un dispositif de commande connecté audit élaborateur et aux moyens de contrôle des machines opératrices faisant partie de l'installation, afin de modifier les conditions de fonctionnement en amont et/ou en aval du banc de mesurage, dans le sens de corriger les écartements du poids unitaire relevé, par rapport à une valeur nominale introduite. Dans ce cas l'appareillage ne se borne pas à suggérer les interventions correctives opportunes, mais il pourvoit lui-même à les effectuer.

Dans les cas où l'installation comprend un dispositif d'étirage du matériau traité, ledit dispositif de contrôle peut être avantageusement connecté opérativement au dispositif d'étirage et il agît en modifiant, dans les limites admises, le rapport d'étirage auquel le matériau est soumis.

De préférence, ledit dispositif de contrôle comprend des moyens temporiseurs destinés à retarder l'action de commande jusqu'à ce qu'on a vérifié que la variation relevée dans le poids unitaire du matériau traité est permanente. Cette disposition évite que des oscillations s'établissent dans le système de contrôle, ainsi qu'on fasse des corrections comme conséquence de variations accidentelles et strictement localisées du poids unitaire du matériau en ruban.

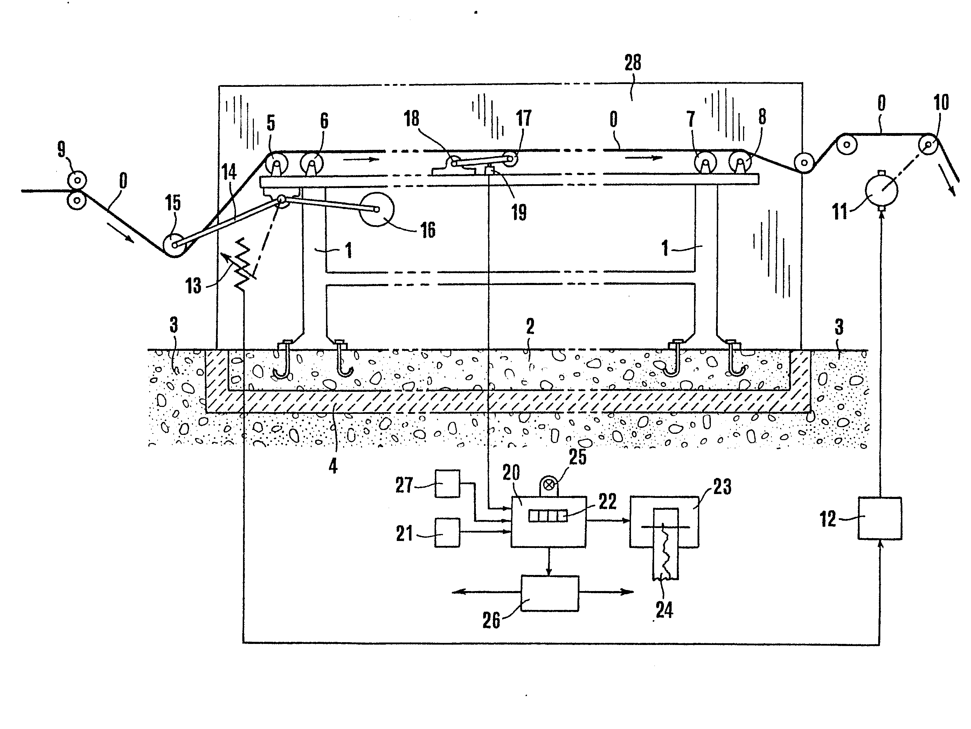

Ces caractéristiques et d'autres, et les avantages de l'objet de l'invention, ressortiront plus clairement de la suivante description d'un mode de réalisation donné seulement à titre d'exemple et représenté schématiquement dans la figure unique du dessin annexé, qui montre une vue latérale interrompue du banc de mesurage et le schéma à blocs des circuits et appareils connectés.

L'appareillage décrit est particulièrement adapté pour l'application entre la pré-aiguilleuse et l'aiguilleuse finale dans une installation pour la fabrication de tissu-non-tissu, mais il peut trouver application aussi, par exemple, dans une installation du même genre ou de genre différent, entre la pareuse finale et l'enrouleuse ou plieuse, ou bien en connexion avec des installations d'imprégnation ou d'autres traitements de tissus-non-tissus ou d'autres genres de matériaux en ruban.

0169275

Dans le cas particulier représenté, le banc de mesurage comprend une structure 1 laquelle, afin de soustraire les appareils de mesurage aux vibrations produites par les machines opératrices voisines, est fixée sur une plinthe de fondation 2 insérée dans le sol environnant 3 avec interposition d'une masse amortisseuse 4, par exemple de matériau fibreux, expansé ou poreux. La structure 1 porte à ses extrémités des moyens de soutien pour le matériau en ruban, constitués dans ce cas par des rouleaux tournants, mais qui peuvent être aussi remplacés par des patins. Ces moyens de soutien sont disposés par couples, à savoir des rouleaux 5 et 6 au commencement du banc de mesurage, et des rouleaux 7 et 8 à sa terminaison. Sur ces rouleaux est conduit un matériau en ruban O qui vient, par exemple, du moyen de traînage en sortie d'une pré- -aiguilleuse, et qui se dirige vers une aiguilleuse finale. Les rouleaux de soutien 6 et 7 définissent un tronçon de matériau qui est soumis au mesurage, tandis que les rouleaux de soutien extérieurs 5 et 8 ont le but de supporter le ruban au voisinage des rouleaux principaux intérieurs 6 et 7, pour éviter que la flexibilité imparfaite du matériau puisse transmettre des sollicitations qui pourraient modifier la longueur effective du tronçon de matériau soumis au mesurage. De plus, le matériau en cours de mesurage est soumis à une tension constante grâce à un moyen de traînage 10 actionné par un moteur électrique à vitesse variable 11, dont le circuit d'alimentation 12 est contrôlé par un détecteur de position, dans cet exemple un potentiomètre 13, connecté au support 14 d'un rouleau dansant 15 pourvu de contre-poids 16 et inséré dans une sinuosité formée par le matériau O entre le moyen de traînage 9 et le rouleau 5.

En un endroit intermédiaire entre les rouleaux de soutien 6 et 7, et de préférence à moitié distance entre eux, est disposé le moyen d'appui 17, constitué per un rouleau tournant ou non tournant ou par un patin, supporté de façon mobile par un dispositif de support 18 et appuyé sur un moyen de mesurage 19, préférablement une cellule de charge électronique. Cette dernière livre donc un signal de sortie qui est une fonction du poids effectif du tronçon de matériau en ruban O compris entre les supports 6 et 7. Ce signal de sortie est envoyé à un moyen élaborateur 20 auquel, par l'entremise d'un dispositif d'introduction 21, est aussi envoyé un signal fonction de la largeur du matériau en ruban O, largeur qui dépend des exigences de fabrication et, donc, peut se modifier d'un cas à l'autre. Sur la base de ces informations, étant constante et notoire la distance entre les supports 6 et 7, le circuit élaborateur 20 est disposé pour calculer le poids unitaire présenté par le matériau en ruban O dans le tronçon compris entre les supports 6 et 7. Le résultat de cette calculation est indiqué par l'élaborateur 20 moyennant un indicateur digital 22. En outre, à l'élaborateur 20 est connecté un instrument enregistreur 23, qui pourvoit à enregistrer sur une bande de papier 24 le graphique continu indiquant les valeurs de poids unitaire du ruban O, relevées par l'appareillage, en fonction du temps ou bien de la coordonnée longitudinale du matériau en ruban lui-même. Cet enregistrement rend possible un contrôle compréhensif des conditions de fonctionnement de l'installation. De plus, la bande peut être détachée lors que le traitement d'une unité (rouleau, plateau de ruban plié ou autre) est terminé, et elle peut être ensuite annexée à ladite unité, afin de documenter les caractéristiques du matériau en ruban qui y est contenu.

A' l'élaborateur 20 est encore connecté un dispositif de signalisation optique et/ou acoustique 25, disposé pour entrer en action lors que le poids unitaire du matériau en ruban vient se trouver en dehors d'un champ d'admissibilité préétabli, de sorte que les préposés peuvent intervenir et rétablir des conditions de traitement correctes. A' ces dispositifs peut être annexé un dispositif d'arrêt, prédisposé pour arrêter automatiquement l'installation lors que le poids unitaire du ruban se déplace en dehors des limites préétablies pour l'intervention du dispositif de signalisation, ou bien en dehors d'autres limites d'urgence, plus larges, elles aussi préétablies.

Enfin, à l'élaborateur 20 est encore connecté un circuit de contrôle 26, prédisposé pour agir sur les machines opératrices précédant le banc de mesurage et/ou sur celles suivant ce banc, de sorte à éliminer ou réduire l'écartement du poids unitaire réel du ruban O par rapport à sa valeur nominale. En particulier, le circuit 26 peut agir sur le dispositif d'étirage précédant le banc de mesurage, en modifiant le rapport de vitesse entre ses moyens de traînage en entrée et en sortie, de sorte à modifier (toujours dans les limites admissibles) le rapport d'étirage auquel le matériau en ruban O est soumis.

Il va de soi que, si l'appareillage suivant l'invention est appliqué à la terminaison de l'installation de traitement, et il est suivi seulement par les moyens d'enroulement ou de pliage du matériau en ruban, le poids unitaire déterminé par l'élaborateur 20 est, sans plus, celui du matériau délivré; si, au contraire, l'appareillage est suivi par d'autres machines opératrices, le poids unitaire du matériau peut être encore modifié. Dans ce cas on peut tenir compte de ces modifications à posteriori, ou bien l'élaborateur 20 peut être prédisposé pour livrer la valeur du poids unitaire du tronçon de matériau situé entre les supports 6 et 7, déjà corrigée en fonction des modifications ultérieures prévues.

L'appareillage peut encore comprendre des moyens pour mesurer la vitesse de passage du matériau en ruban O, ou bien pour recevoir cette information par d'autres appareils déjà présents dans l'installation, et alors l'élaborateur 20 peut recevoir aussi cette information par une entrée 27, et il peut être prédisposé pour indiquer et/ou enregistrer aussi cette vitesse ou bien, en la calculant sur sa base, la production horaire du matériau traité, laquelle peut être exprimée en poids, en longueur ou en surface par unité de temps, ou bien encore d'autres grandeurs obtenues par celles-ci moyennant calculation, intégration ou dérivation.

Comme le mesurage du poids unitaire du tronçon de matériau en ruban O situé entre les supports 6 et 7 pourrait être dérangé par des courants d'air présents dans le local, des écrans de protection adaptés, comme 28, peuvent être disposés avec avantage dans des positions opportunes autour de l'appareillage. Ces écrans sont de préférence en matériau transparent, de sorte à permettre l'observation de l'appareillage et du ruban qui le traverse.

Comme on l'a dit, l'appareillage décrit est particulièrement adapté pour contrôler des installations pour la fabrication ou l'imprégnation de tissu-non-tissu, mais elle peut trouver des applications avantageuses en maint autres cas, comme par exemple dans la production, moyennant extrusion, calandrage ou d'autres procédés, de matériaux en ruban, dans l' enduisage de substances sur des matériaux en ruban, et en des applications similaires.

REVENDICATIONS

1 . Appareillage pour le contrôle d'une installation de traitement de matériau en ruban (0), caractérisé en ce qu'il comprend: - un banc de mesurage (1) inséré en un endroit adapté de l'installation de traitement, ce banc supportant des moyens de soutien (6,7) du matériau en ruban (0) en cours de traitement, disposés à une distance mutuelle préfixée, et un moyen d'appui (17) pour le matériau en ruban disposé en un endroit intermédiaire entre lesdits moyens de soutien (6,7); - un moyen de mesurage (19) connecté audit moyen d'appui (17) pour mesurer la force appliquée par gravité par le matériau en ruban (0) audit moyen d'appui (17); - un moyen (20) élaborateur du signal de sortie dudit moyen de mesurage (19), destiné à calculer le poids unitaire du tronçon de matériau en ruban (0) situé entre lesdits moyens de soutien (6,7); - un moyen (22) d'indication visuelle du poids unitaire ainsi calculé par le moyen élaborateur (20); - et un moyen avertisseur (25) connecté audit moyen élaborateur (20) pour être actionné par le dépassement, dans un sens ou dans l'autre, des limites préfixées pour ledit poids unitaire.

2 . Appareillage de contrôle suivant la revendication 1, caractérisé en ce que les moyens de soutien (6,7) pour le matériau en ruban sur le banc de mesurage sont doubles (6,5; 7,8), les moyens de soutien intérieurs (6,7) définissant la longueur soumise à mesurage, et les moyens de soutien extérieurs (5,8) supportant les forces dues à la flexibilité imparfaite du matériau (0).

3 . Appareillage de contrôle suivant la revendication 1, caractérisé en ce qu'il comprend en outre des moyens (10-16) pour maintenir constante la tension longitudinale du matériau en ruban (0) en correspondence du banc de mesurage (1).

4 . Appareillage de contrôle suivant la revendication 3, caractérisé en ce que lesdits moyens (10-16) pour maintenir constante la tension consistent en un rouleau dansant (15) disposé à l'entrée du banc de mesurage (1), en un moyen de traînage (10) avec moteur (11) à vitesse va-

riable, disposé à la sortie du banc de mesurage (1), et en un circuit (12, connu en soi) pour le contrôle de la vitesse du moteur de traînage (11) en fonction de la position du rouleau dansant (15).

5 . Appareillage de contrôle suivant la revendication 1, caractérisé en ce qu'il comprend aussi un instrument (23) enregistreur sur bande (24), connecté audit élaborateur (20) pour délivrer un enregistrement graphique continu (24) du poids unitaire local du matériau en ruban traité (0), dans chaque période de fonctionnement de l'installation.

6 . Appareillage de contrôle suivant la revendication 1, caractérisé en ce qu'il comprend encore des moyens (27) pour relever la vitesse de passage du matériau en ruban (0) sur le banc de mesurage (1), et pour calculer, indiquer et, le cas échéant, enregistrer la production horaire et/ou la production dans une période de fonctionnement préfixée, exprimée en poids, en longueur et/ou en surface du matériau traité, et/ou des grandeurs obtenues de celles-ci par calculation, dérivation ou intégration.

7 . Appareillage de contrôle suivant la revendication 1, caractérisé en ce qu'il comprend encore un dispositif de commande (26) connecté audit élaborateur (20) et aux moyens de contrôle des machines opératrices faisant partie de l'installation, afin de modifier les conditions de fonctionnement en amont et/ou en aval du banc de mesurage (1), dans le sens de corriger les écartements du poids unitaire relevé, par rapport à une valeur nominale introduite.

8 . Appareillage de contrôle suivant la revendication 7, caractérisé en ce que ledit dispositif de contrôle (26) est connecté opérativement à un dispositif d'étirage du matériau en ruban traité, et qu'il agît en modifiant, dans les limites admises, le rapport d'étirage auquel le matériau (0) est soumis.

9 . Appareillage de contrôle suivant la revendication 7, caractérisé en ce que ledit dispositif de contrôle (26) comprend des moyens temporiseurs destinés à retarder l'action de commande jusqu'à ce qu'on a vérifié que la variation relevée dans le poids unitaire du matériau traité

(O) est permanente.

10 . Appareillage de contrôle suivant la revendication 1, caractérisé en ce que ledit banc de mesurage (1) est fixé sur une plinthe de fondation (2) insérée dans le sol environnant (3) avec interposition d'un matériau amortisseur (4).

11 . Appareillage de contrôle suivant la revendication 1, caractérisé en ce que ledit banc de mesurage (1) est protégé contre les courants d'air par des écrans (28), préférablement transparents, disposés autour de lui.

12 . Bande d'enregistrement (24) produite par un instrument enregistreur (23) d'un appareillage suivant la revendication 5 et éventuellement 6, portant l'enregistrement graphique continu du poids unitaire local du matériau en ruban (O) traité dans une période de fonctionnement déterminée de l'installation, ainsi que, éventuellement, l'indication d'autres grandeurs relatives au fonctionnement de l'installation, destinée à être annexée à une unité de matériau en ruban traité, comme document indicatif des caractéristiques générales et locales du matériau en ruban contenu dans ladite unité.

13 . Appareillage de contrôle suivant une ou plusieurs des revendications 1 à 11, caractérisé par son application particulière dans une installation pour la fabrication de tissu-non-tissu.

14 . Appareillage de contrôle suivant une ou plusieurs des revendications 1 à 11, caractérisé par son application particulière dans une installation pour l'imprégnation de tissu-non-tissu.

Office européen
des brevets

**RAPPORT DE RECHERCHE EUROPEENNE**

EP 84 20 1092

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X,Y | EP-A-0 005 139 (ROCKWOOL)<br>* Revendications 1,4,11; page 12, alinéa 3 * | 1,7 | D 04 H 1/00<br>G 01 G 11/12 |
| A | | · 13 | |
| | --- | | |
| X,Y | EP-A-0 005 416 (ROCKWOOL)<br>* Revendications 1,12; page 12, alinéas 3,4 * | 1,7 | |
| | --- | | |
| Y | FR-A-1 217 384 (SCHENK)<br>* Résumé, point 2; page 2, colonne de gauche, alinéas 6,7 * | 1,2,7 | |
| | --- | | |
| Y | DE-A-2 623 591 (PFISTER)<br>* Revendications 1,4; page 8, alinéa 1; page 10, avant-dernière ligne * | 1,2,7 | DOMAINES TECHNIQUES RECHERCHES (Int Cl.4) |
| | ----- | | D 04 H<br>G 01 G<br>D 06 B<br>B 65 G<br>B 65 H |

Le present rapport de recherche a eté etabli pour toutes les revendications

| Lieu de la recherche | Date d'achèvement de la recherche | Examinateur |
|---|---|---|
| LA HAYE | 25-03-1985 | CATTOIRE V.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82